# EUROPÄISCHE PATENTSCHRIFT

(11) **EP 0 972 553 B1**
(45) Veröffentlichungstag und Bekanntmachung des Hinweises auf die Patenterteilung: **05.09.2001**
(21) Anmeldenummer: 99112929.7
(22) Anmeldetag: 05.07.1999
(51) Int. Cl.: B01D 29/11, B01D 36/04

(54) **Abscheidevorrichtung zur Verwendung bei der Leiterplattenfertigung**
Separator device for use in the manufacture of printed circuit boards
Dispositif de separation pour l emploi dans la fabrication des plaquettes de circuits imprimés

(30) Priorität: 17.07.1998 DE 19832105
(43) Veröffentlichungstag der Anmeldung: 19.01.2000
(73) Patentinhaber: Pill e.K., 71549 Auenwald (DE)
(72) Erfinder: Seifert, Dietmar, 71549 Auenwald-Mittelbrüden (DE)
(74) Vertreter: Abel, Martin, Dipl.-Ing.

(56) Entgegenhaltungen:
- EP-A- 0 716 871
- WO-A-98/15336
- DE-A- 4 321 093
- GB-A- 1 187 268

## Beschreibung

Die Erfindung betrifft eine Abscheidevorrichtung zum Abscheiden von Feststoffen aus Flüssigkeit bei der Leiterplattenfertigung, insbesondere zum Abscheiden des abgestrippten Resists aus der Stripperflüssigkeit.

Bei der Herstellung von Leiterplatten erfolgt regelmäßig eine vorübergehende Beschichtung mit einem sogenannten Resist, der anschließend wieder entfernt werden muss. Hierzu werden die Leiterplatten in einem geeigneten Behandlungsmodul mit einem als Stripperflüssigkeit bezeichneten flüssigen Reinigungsmedium besprüht, das den Resist ablöst. In dem Bestreben, einen möglichst wirtschaftlichen Verfahrensablauf zu erhalten, wird die aus dem Ablösevorgang resultierende Suspension aus Stripperflüssigkeit und abgelöstem Resist in einer Abscheidevorrichtung einer Abscheidebehandlung unterzogen, in der eine Trennung der Resist-Feststoffe von der Stripperflüssigkeit stattfindet. Die gereinigte Stripperflüssigkeit kann anschließend wiederverwendet werden, der abgeschiedene Resist lässt sich einer Entsorgung zuführen. Dabei ist das Bestreben, eine abgeschiedene Resistmasse zu erhalten, die nur noch einen möglichst geringen Anteil an Restflüssigkeit beinhaltet.

Eine aus der DE-U1-92 00 734 bekannte Abscheidevorrichtung umfasst eine Hauptfilterstufe mit mehreren Hydrozyklonen, denen eine mechanische Filtereinrichtung als Feinfilterstufe nachgeschaltet ist. Der Großteil der Stripperflüssigkeit wird in der Hauptfilterstufe fliehkraftbedingt von den Resist-Feststoffen entfernt. Die noch verbleibende, meist pastöse Konsistenz aufweisende Suspension erfährt dann in der Feinfilterstufe eine Filtrierung, an deren Ende ein Filterkuchen steht, der sich aus Resistmasse und weiter verringertem Flüssigkeitsanteil zusammensetzt.

Allerdings ist der Wirkungsgrad einer derartigen Filtereinrichtung noch nicht optimal. Durch den im Filterkuchen verbleibenden Restflüssigkeitsanteil ergibt sich ein unnötig großes Volumen, das als Sonderabfall entsorgt werden muss. Im Falle der Filtereinrichtung Gemäß DE-U1-92 00 734 ist das Filtermittel als Filterband ausgeführt, das durch eine Fördereinrichtung zu einer endlosen Umlaufbewegung angetrieben wird und auf dessen oberes Trum die zu filtrierende Suspension aufgebracht wird. Das untere Trum wird von der rotierenden Bürstenanordnung einer Reinigungseinrichtung beaufschlagt, um noch anhaftende Filterkuchenbestandteile abzulösen. Abgesehen von dem verbesserungswürdigen Wirkungsgrad verfügt diese Filtereinrichtung auch über eine relativ aufwendige Bauweise.

Eine ähnliche Vorrichtung geht aus der WO 95/24257 hervor. Dort ist das Filtermittel als zylindrisches Sieb ausgeführt, das gedreht werden kann, um den anhaftenden Resist mittels eines feststehenden Schabers abzulösen.

Auch bei der Vorrichtung gemäß DE 27 51 091 C2 ist ein zylindrisches Sieb als Filtermittel vorgesehen. Das zu filternde Material wird hier mittels einer fest mit dem Sieb verbundenen Schnecke gefördert. Als Reinigungseinrichtung dient eine von außen her mit dem Sieb zusammenarbeitende Bürste.

Aus der WO-A-98/15336 geht allerdings bereits eine Abscheidevorrichtung zum Abscheiden von Feststoffen aus Flüssigkeit hervor, die über eine Filtereinrichtung verfügt, bei der die Fördereinrichtung und die Reinigungseinrichtung als Baueinheit in Gestalt einer Abstreifeinrichtung ausgeführt sind. Die Abstreifeinrichtung beinhaltet eine rotationsangetriebene Förderschnecke, deren Schneckenelement ein Abstreifelement bildet, das im Betrieb unter Mitnahme des Filterkuchens über das hier von einem rohrähnlichen Filtergehäuse gebildete Filtermittel hinwegläuft. Um den Reinigungseffekt zu unterstützen, ist die Förderschnecke am äußeren Rand mit einem zum Beispiel von einer Bürste gebildeten Abstreifer bestückt, der mit dem Filtermittel zusammenarbeiten kann.

Die GB-A-1 187 268 offenbart ein Filtergerät, das als Filtermittel ein rohrähnlich geformtes Sieb aufweist, in dem Schlagelemente rotieren, die das zu filternde Material gegen die Innenfläche des Siebes werfen können. Das Filtermittel ist, zur Gewährleistung eines gespannten Zustandes, an seinen beiden Endbereichen um einen den Innendurchmesser des Siebes vorgebenden Ring herumgespannt.

Es ist die Aufgabe der vorliegenden Erfindung, eine Abscheidevorrichtung zu schaffen, deren Filtereinrichtung bei einfachem Aufbau einen verbesserten Wirkungsgrad liefert.

Gelöst wird diese Aufgabe durch eine Abscheidevorrichtung zum Abscheiden von Feststoffen aus Flüssigkeit bei der Leiterplattenfertigung, insbesondere zum Abscheiden des abgestrippten Resists aus der Stripperflüssigkeit, mit einer Filtereinrichtung, die ein flüssigkeitsdurchlässiges, Feststoffe zurückhaltendes Filtermittel aufweist, auf das die zu filtrierende Suspension aufgebracht wird, und die eine Fördereinrichtung zum Entfernen der herausfiltrierten Feststoffe (Filterkuchen) aus der Filtrierzone sowie eine Reinigungseinrichtung zum Reinigen der Oberfläche des Filtermittels von darauf abgelagerten Filterkuchenbestandteilen enthält, wobei die Fördereinrichtung und die Reinigungseinrichtung als Baueinheit in Gestalt einer Abstreifeinrichtung ausgeführt sind, die mindestens ein in Berührkontakt mit der nach oben weisenden Oberfläche des Filtermittels stehendes Abstreifelement aufweist, das in der gewünschten Förderrichtung unter Mitnahme des Filterkuchens über das Filtermittel hinwegbewegbar ist, und mit einer Spanneinrichtung zum Einstellen einer Vorspannung, mit der das mindestens eine Abstreifelement und das Filtermittel gegeneinander gedrückt werden.

Aus der Zusammenfassung der Fördereinrichtung und der Reinigungseinrichtung resultiert eine beträchtliche Verringerung des baulichen Aufwandes und der Verschleißanfälligkeit der Filtereinrichtung. Gleichzeitig ergibt sich durch das Wirkprinzip der Abstreifeinrichtung, die mit einem oder mehreren Abstreifelementen unter Berührkontakt über das Filtermittel hinweggleitet, eine verbesserte Filtrierwirkung mit erhöhtem Wirkungsgrad. Ein jeweiliges Abstreifelement fördert den auf dem Filtermittel zurückbleibenden Filterkuchen unter Hinwegbewegung über das Filtermittel aus der Filtrierzone, wobei in dem Filterkuchen vorhandene Flüssigkeit durch das Filtermittel hindurch abtropfen kann. Da der Filterkuchen hierbei stets einer mechanischen Schubkraft ausgesetzt ist, erfährt er zugleich eine gewisse Komprimierung, die im weitesten Sinne mit dem Ausquetschen eines Schwammes vergleichbar ist, so dass die Flüssigkeit nicht nur schwerkraftbedingt sondern auch durch Fremdeinwirkung aus der Feststoffmasse austritt. Der bei der Förderbewegung vorhandene Berührkontakt zwischen dem mindestens einen Abstreifelement und dem Filtermittel bewirkt eine ständige Reinigung der Oberfläche des Filtermittels, indem der darauf abgelagerte Filterkuchen abgestreift bzw. abgeschabt und einem den Durchsatz beeinträchtigenden Zusetzen der im Filtermittel vorhandenen Durchtrittsöffnungen entgegengewirkt wird.

Um ungeachtet eventueller Fertigungs- und Montagetoleranzen im Betrieb der Abstreifeinrichtung eine abschabende Abstreifwirkung zu gewährleisten, ist die Filtereinrichtung mit einer Spanneinrichtung ausgestattet, die das Einstellen einer Vorspannung ermöglicht, mit der das mindestens eine Abstreifelement und das Filtermittel gegeneinander gedrückt werden. Die Spanneinrichtung arbeitet vorzugsweise mit dem Filtermittel zusammen.

Die Filtereinrichtung lässt sich nicht nur als Feinfilterstufe verwenden, sondern eignet sich bei entsprechender Auslegung auch als Hauptfilterstufe, der nicht notwendigerweise eine Feinfilterstufe nachgeschaltet werden muss. Die Filtereinrichtung könnte mit der bei Ablösen des Resists unmittelbar anfallenden Suspension direkt gespeist werden.

Vorteilhafte Weiterbildungen der Erfindung gehen aus den Unteransprüchen hervor.

Es empfiehlt sich eine geneigte Anordnung des Filtermittels mit schräg nach oben verlaufender Förderrichtung, so dass sich bedingt durch eine der Schubkraft der Abstreifeinrichtung entgegenwirkende Gewichtskraftkomponente des Filterkuchens ein besonders effektiver "Ausquetschvorgang" des Filterkuchens einstellt.

Zweckmäßigerweise enthält die Filtereinrichtung in einer sich an die Filtrierzone anschließenden Ausgabezone eine nach unten orientierte Ausgabeöffnung, über die das mindestens eine Abstreifelement der Abstreifeinrichtung zumindest teilweise hinweglaufen kann, um den aus der Filtrierzone herausgeförderten Filterkuchen aus der Filtereinrichtung auszuführen.

Ein besonders guter Wirkungsgrad des Filtrierprozesses ergibt sich, wenn das oder die Abstreifelement(e) stets gleichzeitig mit mehreren in Förderrichtung beabstandeten Abstreifpartien mit dem Filtermittel in Berührkontakt steht bzw. stehen. Die Abstreifeinrichtung kann beispielsweise mehrere axial beabstandete plattenartige Abstreifelemente aufweisen, die nacheinander unter Beibehaltung des Berührkontaktes über das Filtermittel hinwegbewegt werden. Bei einer besonders vorteilhaften Bauform verfügt die Abstreifeinrichtung über eine rotationsangetriebene Förderschnecke, deren wendelförmiges Schneckenelement das Abstreifelement bildet, das mit in Förderrichtung beabstandeten, Abstreifpartien bildenden Bereichen an der Oberfläche des Filtermittels anliegt, welche sich bei der Rotation kontinuierlich in der Förderrichtung über das Fördermittel hinwegbewegen. Die Förderschnecke ist dabei zugleich in der Lage, die aufgebrachte Suspension bzw. den daraus resultierenden Filterkuchen zu durchmischen und dadurch den Flüssigkeitsaustrag noch weiter zu begünstigen.

Speziell im Zusammenhang mit einer Förderschnecke ist es besonders vorteilhaft, wenn das Filtermittel Bestandteil der Wandung eines länglichen, mit liegender Ausrichtung horizontal oder leicht schräg verlaufenden rinnen- oder rohrähnlichen Filtergehäuses ist, das die Förderschnecke koaxial über wenigstens einen Teil ihres Umfanges umschließt.

Im Zusammenhang mit einer Förderschnecke kann das vorzugsweise flexible und/oder biegeelastische Filtermittel über wenigstens einen Teilumfang um die Förderschnecke herumgelegt und durch entsprechende Vorspannung fest an die Außenkanten des Schneckenelementes angedrückt werden. Durch die Spanneinrichtung kann vorzugsweise auch im Falle eines Verschleißes ein problemloses Nachspannen erfolgen, so dass sich eine hohe Standzeit für die aufeinander ablaufenden Bestandteile ergibt.

Als Filtermittel empfiehlt sich insbesondere ein dünnwandiges flächenhaftes Bauteil, das perforiert, geflechtartig oder gewebeartig ausgeführt ist und das über biegeflexible Eigenschaften verfügen kann. Es kann insbesondere ein Drahtgeflecht bzw. Drahtgewebe zum Einsatz kommen, das aus Metall und/oder Kunststoffmaterial bestehen kann.

Nachfolgend wird die Erfindung anhand der beiliegenden Zeichnung näher erläutert. In dieser zeigen:
- Figur 1: ein in der Leiterplattenfertigung eingesetztes Behandlungsmodul in Gestalt eines Strippermoduls in schematischer Seitenansicht, das mit einer Abscheidevorrichtung erfindungsgemäßer Bauart ausgestattet ist,

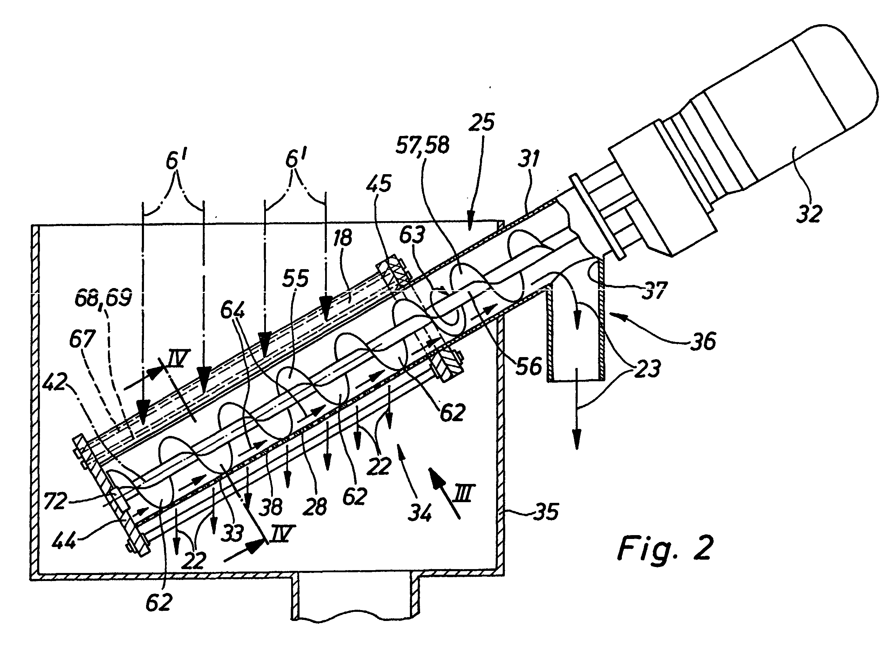

- Figur 2: 2 die bei der Anordnung der Figur 1 integrierte Filtereinrichtung in vergrößerter Einzeldarstellung und teilweise im Längsschnitt,
- Figur 3: eine Unteransicht der Filtereinrichtung aus Figur 2 mit Blickrichtung gemäß Pfeil III, und
- Figur 4: einen Querschnitt durch die Filtereinrichtung im Bereich der Filtrierzone gemäß Schnittlinie IV - IV aus Figur 2.

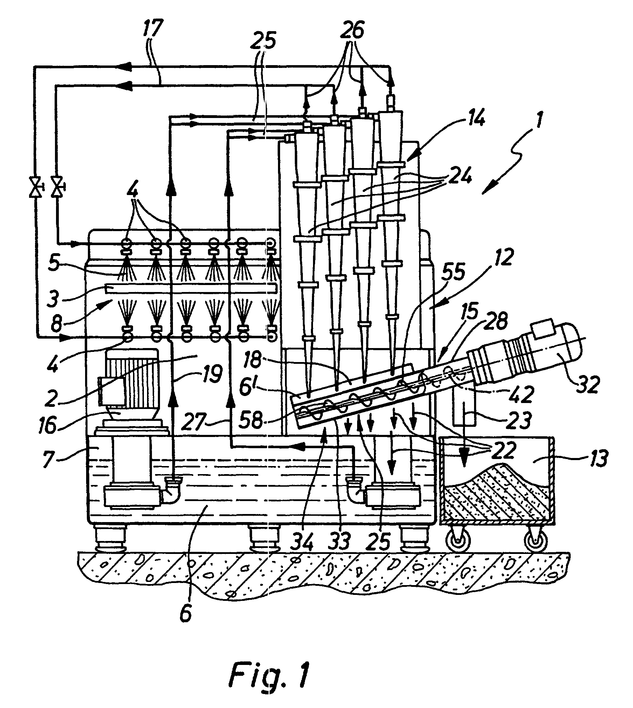

Die Figur 1 zeigt schematisch ein bei der Fertigung elektronischer Leiterplatten einsetzbares Behandlungsmodul 1, in dem von Leiterplatten der für die Ätzbehandlung aufgebrachte und nicht mehr benötigte Resist abgelöst wird. Dieses Ablösen wird allgemein als "Strippen" bezeichnet, so daß man das beispielhafte Behandlungsmodul 1 auch als Strippermodul benennen kann.

Die Figur 1 zeigt exemplarisch eine in einen Innenraum 2 des Behandlungsmoduls 1 eingebrachte Leiterplatte 3, die aus Sprühköpfen 4 von oben und/oder von unten mit einer geeigneten Flüssigkeit, hier: Stripperflüssigkeit 5, besprüht wird. Die Stripperflüssigkeit 5 löst an der Leiterplatte 3 sitzenden Resist ab und bildet mit diesem eine einen hohen Flüssigkeitsanteil aufweisende Suspension 6, die sich in einem Auffangbecken 7 unterhalb der Behandlungszone 8 ansammelt.

In einer dem Behandlungsmodul 1 zugeordneten und zweckmäßigerweise wenigstens teilweise in dieses Behandlungsmodul 1 integrierten Abscheidevorrichtung 12 wird die Suspension weitestmöglich in ihre flüssigen und festen Bestandteile getrennt. Hierzu werden die beim Ausführungsbeispiel aus dem abgelösten Resist bestehenden Feststoffe aus der Stripperflüssigkeit 5 abgeschieden. Zurück bleiben letztlich weitestgehend feststofffreies flüssiges Filtrat einerseits und herausfiltrierte Feststoffe, die sich als Filterkuchen bezeichnen lassen, andererseits. Das Filtrat läßt sich im Behandlungsmodul 1 als Stripperflüssigkeit wiederverwenden, die herausfiltrierten Feststoffe werden in ein Sammelbehältnis 13 geleitet und kontinuierlich oder von Zeit zu Zeit entsorgt.

Die Abscheidevorrichtung 12 des Ausführungsbeispiels enthält eine Hauptfilterstufe 14 und eine dieser nachgeschaltete Feinfilterstufe 15. Durch eine Pumpeinrichtung 16 wird die unmittelbar aus dem Strippvorgang resultierende Suspension 6 hohen Flüssigkeitsanteils in die Hauptfilterstufe 14 eingespeist (Pfeil 19), in der ein Großteil der Flüssigkeit abgeschieden wird, die gemäß Pfeilen 17 erneut den Sprühköpfen 4 zugeführt werden kann. Die zurückbleibenden Feststoffe sind allerdings weiterhin mit einem gewissen Flüssigkeitsanteil vermengt und bilden mit diesem eine einen reduzierten Flüssigkeitsanteil enthaltende Suspension 6' mit bereits relativ hohem Feststoffanteil. Letztere wird in einer Einspeisezone 18 in die Feinfilterstufe 15 eingespeist, in der der Flüssigkeitsanteil nochmals entscheidend reduziert wird. Aus der Feinfilterstufe 15 treten letztlich einerseits gereinigtes flüssiges Filtrat (Pfeile 22) und andererseits einen nurmehr sehr geringen Flüssigkeitsanteil aufweisende, nachfolgend als Filterkuchen bezeichnete herausfiltrierte Feststoffe (Pfeil 23) aus. Bei dem Filterkuchen handelt es sich vorliegend um den zu entsorgenden Resist.

Die Hauptfilterstufe kann eine integrierte Bandfiltereinrichtung enthalten, wie sie in der Zeitschrift "Elektrotechnik", 70, Heft 2, 16. Februar 1988, Seiten 36/37 beschrieben ist. Eine solche Bandfiltereinrichtung würde man vertikal zwischen der Behandlungszone 8 und dem Auffangbecken 7 plazieren. Beim Ausführungsbeispiel kommt anstelle einer solchen Bandfiltereinrichtung eine Zykloneinrichtung zum Einsatz, die einen oder vorzugsweise mehrere sogenannte Hydrozyklone 24 aufweist. In diese Hydrozyklone 24 wird das einer Abscheidebehandlung zu unterziehende Medium gemäß Pfeilen 25 im oberen Bereich unter Druck tangential eingespeist, so daß sich die schwereren Feststoffteilchen spiralförmig längs der sich nach unter hin verjüngenden konischen Zyklonwandung nach unten bewegen und als Suspension 6' geringen Flüssigkeitsanteils unten ausgetragen und an der Einspeisezone 18 in eine Filtereinrichtung 25 der Feinfilterstufe 15 eingespeist werden. Der von den Feststoffen befreite Flüssigkeitsstrom bewegt sich im Innern des Zyklons nach Art einer Kerze axial nach oben und tritt gemäß Pfeilen 26 aus den Hydrozyklonen 24 aus, um gemäß Pfeilen 17 erneut den Sprühköpfen 4 zugeführt zu werden. Durch dieses fliehkraftbedingte Abscheideprinzip läßt sich bereits der größte Anteil an Flüssigkeit, beispielsweise in der Größenordnung von 90 %, aus der ursprünglichen Suspension 6 abscheiden, so daß der in der aus den Hydrozyklonen 24 austretenden Suspension 6' enthaltende Flüssigkeitsanteil beispielsweise auf 10 % reduziert ist.

Aus Figur 1 ist ersichtlich, daß das aus der Filtereinrichtung 25 austretende Filtrat gemäß Pfeilen 27 neuerlich in die Hydrozyklone 24 eingespeist werden kann, um die Filtrationswirkung noch weiter zu optimieren.

Nachstehend erfolgt eine detaillierte Beschreibung einer bevorzugten Ausgestaltung der in der Feinfilterstufe 15 verwendeten Filtereinrichtung 25. Hierzu kann aber vorausgeschickt werden, daß sich die Filtereinrichtung 25 bei entsprechender größenmäßiger Auslegung auch als Hauptfilterstufe oder als alleinige Filtereinrichtung des Behandlungsmoduls 1 einsetzen ließe. Sie könnte beispielsweise derart im Behandlungsmodul 1 plaziert werden, daß ihre nach oben weisende Einspeisezone 18 unterhalb der Behandlungszone 8 liegt und eine unmittelbare Zuführung der noch einen hohen Flüssigkeitsanteil aufweisenden Suspension 6 erfolgen kann.

Die Filtereinrichtung 25 enthält eine rohrähnliche Struktur 28, die an das Gehäuse eines Antriebsmotors 32 angeflanscht ist. Ein Längenabschnitt der rohrähnlichen Struktur 28 ist von einem flüssigkeitsdurchlässigen und Feststoffe ab einer bestimmten Größe zurückhaltenden Filtermittel 33 gebildet. Ein zwischen diesem Filtermittel 33 und dem Antriebsmotor 32 verlaufender Längenabschnitt der rohrähnlichen Struktur 28 ist von einem Rohrkörper 31 gebildet.

Der Bereich der Filtereinrichtung 25, in dem sich das Filtermittel 33 befindet, definiert eine Filtrierzone 34. Sie befindet sich beim Ausführungsbeispiel unterhalb der unterliegenden Ausgabeöffnungen der Hydrozyklone 24.

Die Filtereinrichtung 25 ist so angeordnet, daß sich ihre Filtrierzone 34 über einem oder vorzugsweise innerhalb eines Auffangbehältnisses 35 für das das Filtermittel 33 durchdringende Filtrat angeordnet ist. Das gemäß Pfeilen 22 aus der Filtereinrichtung 25 austretende Filtrat wird somit aufgefangen und kann der Weiterverwertung zugeführt werden.

Der Antriebsmotor 32 befindet sich außerhalb des Auffangbehältnisses 35. Der geschlossene Rohrkörper 31 kann dabei die Wand des Auffangbehältnisses 35 durchsetzen.

Außerhalb der Filtrierzone 34 und des Auffangbehältnisses 35 befindet sich eine Ausgabezone 36 für den Filterkuchen. Sie zeichnet sich durch eine in der Wandung des Rohrkörpers 31 ausgebildete und nach unten orientierte Ausgabeöffnung 37 aus, an die sich beim Ausführungsbeispiel ein nach unten ragender Rohrstutzen anschließt.

Der das Filtermittel 33 beinhaltende Längenabschnitt der rohrähnlichen Struktur 28 stellt ein Filtergehäuse 38 von rohrähnlicher Gestalt dar. Es hat längliche Erstreckung und verfügt über eine liegende Ausrichtung mit schrägem, in Richtung zum Antriebsmotor 32 ansteigendem Verlauf. Das Filtermittel 33 ist ein Bestandteil der Wandung des Filtergehäuses 38 und bildet beim Ausführungsbeispiel den sich bezogen auf die Längsachse 42 in Umfangsrichtung erstreckenden umfangsseitigen Wandungsabschnitt 43. Dieser ist also in seiner Gesamtheit von dem Filtermittel 33 gebildet. Die auf der dem Antriebsmotor 32 axial entgegengesetzten Stirnseite der rohrähnlichen Struktur 28 angeordnete Abschußwand 44 des Filtergehäuses 38 ist zweckmäßigerweise flüssigkeitsundurchlässig und beim Ausführungsbeispiel von einer Platte gebildet.

Die Verbindung zwischen dem Filtergehäuse 38 und dem Rohrkörper 31 wird zweckmäßigerweise über eine Flanscheinrichtung 45 hergestellt. Sie gewährleistet auch ein bedarfsgemäßes Abnehmen des Filtergehäuses 38 zu Wartungszwecken.

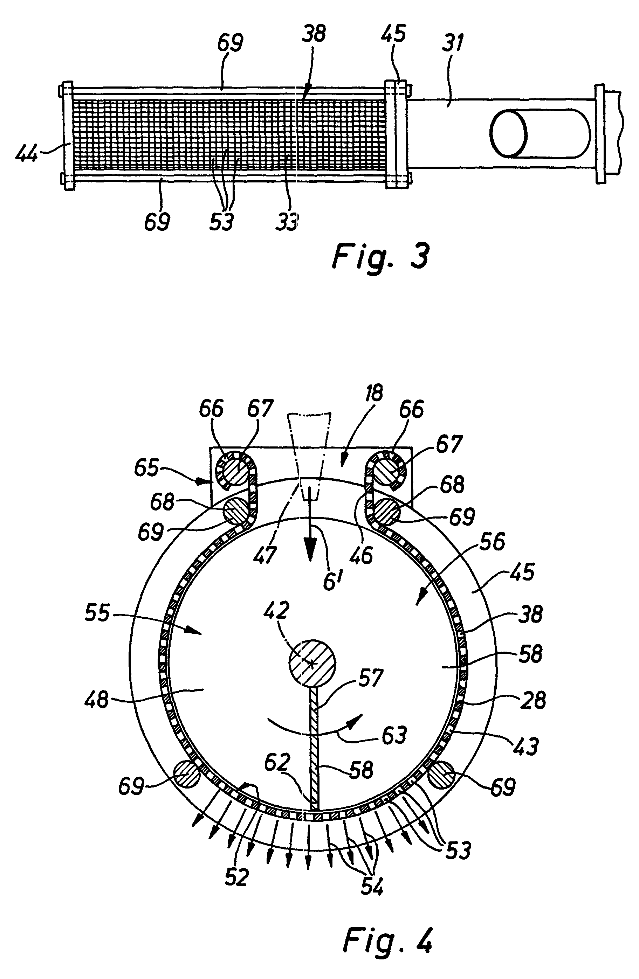

Wie aus Figur 4 hervorgeht, verfügt der umfangsseitige Wandungsabschnitt 43 des Filtergehäuses 38 in dem oben liegenden Umfangsbereich über eine schlitzartige Öffnung 46. Sie repräsentiert die Einspeisezone 18, wobei die Hydrozyklone 24 mit ihrem die Austriffsöffnung für die zu filternde Suspension 6' aufweisenden unteren Endabschnitt 47 in die schlitzartige Öffnung 46 hineinragen können.

Anstelle einer schlitzartigen Öffnung 46 könnte auch jedem Hydrozyklon 24 eine Einzelöffnung zur Einspeisung der zu filternden Suspension 6' zugeordnet sein.

Die in der Einspeisezone 18 zugeführte Suspension 6' gelangt in den Innenraum 48 des Filtergehäuses 38 und dort auf die nach oben weisende Oberfläche 52 des Filtermittels 33. Der Feststoffanteil der Suspension 6' wird von dem Filtermittel 33 zurückgehalten, die Flüssigkeit tritt durch feine Durchtrittsöffnungen 53 des Filtermittels 33 hindurch (Pfeile 54 in Figur 4) und gelangt als Filtrat in das Auffangbehältnis 35.

Um die gewünschte Filtration zu erhalten, wäre es prinzipiell ausreichend, nur den unten liegenden Bereich des umfangsseitigen Wandabschnittes 43 als Filtermittel auszuführen und dabei insbesondere denjenigen Bereich, dessen dem Innenraum 48 zugewandte Oberfläche nach oben weist. Das Filtermittel 33 würde dann eine etwa rinnenähnliche Gestalt einnehmen.

Im Innern der rohrähnlichen Struktur 28 ist eine motorisch angetriebene Abstreifeinrichtung 55 angeordnet. Sie erstreckt sich in Längsrichtung der rohrähnlichen Struktur 28 und steht mit dem Antriebsmotor 32 in Antriebsverbindung. Bei dem abgebildeten bevorzugten Ausführungsbeispiel umfaßt sie eine Förderschnecke 56, die sich koaxial im Innern der rohrähnlichen Struktur 28 erstreckt und die durch den Antriebsmotor 32 zu einer Rotationsbewegung um ihre Längsachse 42 angetrieben werden kann.

Das über einen wendelförmigen Verlauf verfügende Schnekkenelement 57 der Förderschnecke 56 bildet ein Abstreifelement 58 der Abstreifeinrichtung 55, das mit seiner Außenkante mit der nach oben weisenden Oberfläche 52 des Filtermittels 33 in Berührkontakt steht. Auf Grund des wendelförmigen Verlaufes ergibt sich somit, daß das Abstreifelement 58 an mehreren in Längsrichtung beabstandeten Stellen an der nach oben weisenden Oberfläche 52 des Filtermittels 33 anliegt, wobei man die betreffenden Bestandteile des Abstreifelements 58 als Abstreifpartien 62 bezeichnen kann, die jeweils von einer Teillänge des Schneckenelementes 57 repräsentiert sind.

Die Abstreifeinrichtung 55 hat eine Doppelfunktion. Zum einen bewirkt sie bei Rotation mit entsprechender Drehrichtung 63, daß der auf der nach oben weisenden Oberfläche 52 des Filtermittels 33 liegende Filterkuchen in einer durch Pfeile angedeuteten Förderrichtung 64 aus der Filtrierzone 34 zur Ausgabezone 36 gefördert wird. Der Filterkuchen bewegt sich dabei an dem Filtermittel 33 entlang, so daß darin noch enthaltener Flüssigkeit ausreichend Zeit und Wegstrecke zur Verfügung steht, um durch das Filtermittel 33 hindurch aus dem Filtergehäuse 38 auszutreten. Die schiebende Beaufschlagung des Filterkuchens durch das Abstreifelement 58 bzw. dessen Abstreifpartien 62 bewirkt dabei einen zusätzlichen ausquetschenden oder auspressenden Effekt, der das Entweichen der Flüssigkeit fördert und dadurch den Wirkungsgrad des Filtriervorganges erhöht.

Das Auspressen der Flüssigkeit aus dem Filterkuchen wird beim Ausführungsbeispiel auch noch dadurch begünstigt, daß das Filtermittel derart geneigt angeordnet ist, daß die Förderrichtung 64 schräg nach oben verläuft. Zweckmäßigerweise schließt die Förderrichtung mit der Horizontalen einen spitzen Winkel ein, der im Bereich zwischen 10° und 20° und dabei vorzugsweise etwa bei 15° liegt.
Die Abstreifeinrichtung 55 übernimmt desweiteren in Baueinheit die Funktion einer Reinigungseinrichtung bezüglich des Filtermittels 33. Indem das Abstreifelement 58 an der Oberfläche 52 des Filtermittels 33 anliegt, streift es von dieser im Rahmen einer durch die Förderbewegung hervorgerufenen schabenden Abstreifbewegung den Filterkuchen ab. Die Oberfläche des Filtermittels 33 wird dadurch im Bereich der Durchtriffsöffnungen 53 laufend gereinigt, so daß die allmähliche Ablagerung einer das Filtermittel 33 verstopfenden Schicht vermieden wird. Der Fördervorgang bewirkt also automatisch einen Selbstreinigungsvorgang des Filtermittels 33.

Die Abstreifeinrichtung 55 erstreckt sich nicht nur im Filtergehäuse 38, sondern auch in dem Rohrkörper 31, wobei das Abstreifelement 58 beim Rotationsbetrieb über die Ausgabeöffnung 37 hinwegläuft, so daß der Filterkuchen zuverlässig gemäß Pfeilen 23 ausgegeben wird. Im Innern des Rohrkörpers 31 kann ein geringfügiger Abstand zwischen dessen Innenfläche und dem Abstreifelement 58 vorliegen.

Anstelle eines wendelförmigen Abstreifelementes der beim Ausführungsbeispiel gezeigten Art könnte beispielsweise auch ein schaufel- oder plattenartiges, quer zur Förderrichtung 64 orientiertes Abstreifelement vorgesehen sein, das linear über die Oberfläche des Filtermittels 33 hinwegverlagert wird.
Denkbar wäre es auch, mehrere derartige einzelne Abstreifelemente mit Abstand aufeinanderfolgend anzuordnen und mit einem geeigneten Antriebsmittel, beispielsweise eine Kette oder eine Spindel, in Förderrichtung 64 zu bewegen.
Beim Ausführungsbeispiel besteht das Filtermittel 33 aus Metall, ebenso das mit seiner Außenkante daran anliegende und darauf entlanglaufende Abstreifelement 58. Auf diese Weise ergibt sich trotz unmittelbarem Kontakt eine hohe Verschleißfestigkeit. Es ist auch von Vorteil, wenn das Abstreifelement 58 zumindest in seinen mit dem Filtermittel 33 unmittelbar in Berührung stehenden Randbereichen als insbesondere unnachgiebiger Festkörper ausgeführt ist.

Das Filtermittel 33 selbst kann als dünnwandiges Bauteil ausgeführt sein, das zum Erhalt einer Vielzahl von Durchtrittsöffnungen 53 mit feiner Verteilung perforiert ist. Das Filtermittel des Ausführungsbeispiels ist von einem geflecht- oder gewebeartigen Drahtkörper gebildet, der im Bereich der Filtrierzone 34 - abgesehen von der freibleibenden Einspeisezone 18 - koaxial um die Förderschnecke 56 herumgelegt ist. Dabei kann das Schneckenelement 57 nicht nur an der nach oben weisenden Oberfläche 52 sondern auch an der übrigen, dem Innenraum 48 zugewandten Oberfläche des kreiszylindrisch gekrümmten Filtermittels 33 anliegen.

Um stets einen ausreichenden Anpreßdruck zwischen dem Abstreifelement 58 und dem Filtermittel 33 zu erhalten, ist die Filtereinrichtung 25 vorzugsweise mit einer Spanneinrichtung 65 ausgestattet, die eine bedarfsgemäße Einstellung und auch Nachjustierung der Vorspannung ermöglicht.

Die Spanneinrichtung 65 arbeitet zweckmäßigerweise mit dem Filtermittel 33 zusammen und greift beim Ausführungsbeispiel an den beiden die Einspeisezone 18 längsseits flankierenden Endbereichen 66 des Filtermittels 33 an. Letzteres ist ausgehend von einem Flachgestalt aufweisenden Körper durch entsprechendes Biegen um die Förderschnecke 56 herumgelegt und mit seinen vorerwähnten Endbereichen 66 jeweils an einem beim Ausführungsbeispiel stangenartigen Spannelement 67 festgelegt. Die Spannelemente 67 erstrecken sich zwischen der Flanscheinrichtung 45 und der Abschlußwand 44, wobei sie um ihre Längsachse verdrehbar sind. Durch Verdrehen wird nun der jeweils zugeordnete Endbereich 66 mehr oder weniger weit auf das zugehörige Spannelement 67 aufgewickelt und dadurch das Filtermittel 33 vergleichbar einem Mantel an den Außenumfang der Förderschnecke 56 herangezogen. Stangenförmige Umlenkelemente 68 für das Filtermittel 33 im Bereich der schlitzartigen Öffnung 46 können die Handhabung vereinfachen.

Seine strukturelle Steifigkeit erhält das Filtergehäuse 38 zweckmäßigerweise durch eine Mehrzahl von parallel zur Längsachse 42 verlaufenden und beispielsweise stangenförmigen Verbindungselementen 69, die außerhalb des Innenraums 48 verlaufen, und die einerseits an der Flanscheinrichtung 45 und andererseits an der Abschlußwand 44 verankert sind, welche letztere zweckmäßigerweise auch ein Drehlager 72 für die Achse der Förderschnecke 56 aufweist. Die Umlenkelemente und/oder Spannelemente können gleichzeitig die Funktion von Verbindungselementen übernehmen.

Mit Hilfe einer nicht näher gezeigte Arretiereinrichtung läßt sich die Drehwinkelstellung eines jeweiligen Spannelements 67 bezüglich dem Filtergehäuse 38 lösbar fixieren. Denkbar wäre auch eine Ausgestaltung, bei der der eine Endbereich 66 des Filtermittels 33 unverstellbar fixiert ist und die Einstellung der Vorspannung nur am anderen Endbereich 66 vorgenommen wird.

Als Material für das Filtermittel 33 kommt insbesondere Metall, beispielsweise Edelstahl, oder ein verschleißfreies Kunststoffmaterial in Frage.

## Patentansprüche

1. Abscheidevorrichtung zum Abscheiden von Feststoffen aus Flüssigkeit bei der Leiterplattenfertigung, insbesondere zum Abscheiden des abgestrippten Resists aus der Stripperflüssigkeit, mit einer Filtereinrichtung (25), die ein flüssigkeitsdurchlässiges, Feststoffe zurückhaltendes Filtermittel (33) aufweist, auf das die zu filtrierende Suspension (6') aufgebracht wird, und die eine Fördereinrichtung zum Entfernen der herausfiltrierten Feststoffe (Filterkuchen) aus der Filtrierzone (34) sowie eine Reinigungseinrichtung zum Reinigen der Oberfläche des Filtermittels (33) von darauf abgelagerten Filterkuchenbestandteilen enthält, wobei die Fördereinrichtung und die Reinigungseinrichtung als Baueinheit in Gestalt einer Abstreifeinrichtung (55) ausgeführt sind, die mindestens ein in Berührkontakt mit der nach oben weisenden Oberfläche (52) des Filtermittels (33) stehendes Abstreifelement (58) aufweist, das in der gewünschten Förderrichtung (64) unter Mitnahme des Filterkuchens über das Filtermittel (33) hinwegbewegbar ist, und mit einer Spanneinrichtung (65) zum Einstellen einer Vorspannung, mit der das mindestens eine Abstreifelement (58) und das Filtermittel (33) gegeneinander gedrückt werden.

2. Abscheidevorrichtung nach Anspruch 1, **dadurch gekennzeichnet**, dass das Filtermittel (33) geneigt angeordnet ist, wobei die Förderrichtung (64) schräg nach oben verläuft.

3. Abscheidevorrichtung nach Anspruch 1 oder 2, **dadurch gekennzeichnet**, dass sich an die Filtrierzone (34) in Förderrichtung (64) des Filterkuchens eine Ausgabezone (36) für den Filterkuchen anschließt.

4. Abscheidevorrichtung nach Anspruch 3, **dadurch gekennzeichnet**, dass die Filtereinrichtung (25) in der Ausgabezone (36) wenigstens eine nach unten orientierte Ausgabeöffnung (37) aufweist, über die das mindestens eine Abstreifelement (58) im Betrieb der Abstreifeinrichtung (55) zweckmäßigerweise zumindest teilweise hinwegläuft.

5. Abscheidevorrichtung nach einem der Ansprüche 1 bis 4, **dadurch gekennzeichnet,** dass die Filtereinrichtung (25) zumindest mit ihrer Filtrierzone (34) in und/oder über einem Auffangbehältnis (35) für das das Filtermittel (33) durchdringende Filtrat angeordnet ist.

6. Abscheidevorrichtung nach einem der Ansprüche 1 bis 5, **dadurch gekennzeichnet,** dass das oder die Abstreifelement(e) stets gleichzeitig mit mehreren in der Förderrichtung (64) beabstandeten Abstreifpartien (62) mit dem Filtermittel (33) in Berührkontakt steht bzw. stehen.

7. Abscheidevorrichtung nach einem der Ansprüche 1 bis 6, **dadurch gekennzeichnet**, dass das Filtermittel (33) Bestandteil der Wandung eines länglichen, mit liegender Ausrichtung horizontal oder schräg verlaufenden rinnen- oder rohrähnlichen Filtergehäuses (38) ist, dessen Längsachse (42) mit der Förderrichtung (64) gleichgerichtet ist.

8. Abscheidevorrichtung nach Anspruch 7, **dadurch gekennzeichnet**, dass das Filtermittel (33) zumindest den unten liegenden Bereich des umfangsseitigen Wandabschnittes (43) des Filtergehäuses (38) einnimmt.

9. Abscheidevorrichtung nach Anspruch 7 oder 8, **dadurch gekennzeichnet**, dass der bezogen auf die Längsachse (42) umfangsseitige Wandlungsabschnitt (43) des Filtergehäuses (38) in seiner Gesamtheit vom Filtermittel (33) gebildet ist.

10. Abscheidevorrichtung nach einem der Ansprüche 1 bis 9, **dadurch gekennzeichnet**, dass die Spanneinrichtung (65) mit dem Filtermittel (33) zusammenwirkt.

11. Abscheidevorrichtung nach einem der Ansprüche 1 bis 10, **dadurch gekennzeichnet**, dass das Abstreifelement (58) vom Schneckenelement (57) einer sich in Förderrichtung (64) erstreckenden rotationsangetriebenen Förderschnecke (56) gebildet ist.

12. Abscheidevorrichtung nach Anspruch 11, **dadurch gekennzeichnet**, dass das Filtermittel (33) die Förderschnecke (56) über wenigstens einen Teil ihres Umfanges koaxial umschließt.

13. Abscheidevorrichtung nach einem der Ansprüche 1 bis 12, **dadurch gekennzeichnet**, dass das Filtermittel (33) aus Metall und/oder Kunststoffmaterial besteht.

14. Abscheidevorrichtung nach einem der Ansprüche 1 bis 13, **dadurch gekennzeichnet**, dass das Filtermittel als perforiertes oder geflecht- oder gewebeartiges dünnwandiges Bauteil ausgeführt ist.

15. Abscheidevorrichtung nach einem der Ansprüche 1 bis 14, **dadurch gekennzeichnet**, dass die Filtereinrichtung (25) Bestandteil einer einer Hauptfilterstufe (14) nachgeschalteten Feinfilterstufe (15) ist.

16. Abscheidevorrichtung nach einem der Ansprüche 1 bis 15, gekennzeichnet durch einen oder mehrere der Filtereinrichtung vorgeschaltete Hydrozyklone (24), mit deren Materialaustrag die Filtereinrichtung (25) gespeist wird.

## Claims

1. Separating apparatus for separating solids from liquids in the manufacture of printed circuit boards, in particular for separating stripped resist from stripping fluid, with a filter device (25) incorporating a filter medium (33) permeable to liquids while retaining solids, to which the suspension (6') to be filtered is applied and which incorporates a conveying device for removing the filtered-out solids (filter cake) from the filtering zone (34) and a cleaning device for removing the deposited filter cake components from the surface of the filter medium (33), wherein the conveying device and the cleaning device are designed as a unit in the from of a wiper device (55) incorporating at least one wiper element (58) in contact with the upward-facing surface (52) of the filter medium (33) and capable of reciprocating movement across the filter medium (33) in the required conveying direction (64) while carrying the filter cake with it, and with a tensioning device (65) for the adjustment of a preload with which the at least one wiper element (58) and the filter medium (33) are pressed against each other.

2. Separating apparatus according to claim 1, **characterised in that** the filter medium (33) is inclined, the conveying direction (64) extending upwards at an angle.

3. Separating apparatus according to claim 1 or 2, **characterised in that** a discharge zone (36) for the filter cake is arranged downstream of the filtering zone (34) in the conveying direction (64) of the filter cake.

4. Separating apparatus according to claim 3, **characterised in that** the filter device (25) is provided with at least one downward-oriented discharge port (37) in the discharge zone (36), which is expediently passed at least partially by the at least one wiper element (58) when the wiper device (55) is in operation.

5. Separating apparatus according to any of claims 1 to 4, **characterised in that** at least the filtering zone (34) of the filter device (25) is arranged in and/or above a collecting tank (35) for the filtrate passing through the filter medium (33).

6. Separating apparatus according to any of claims 1 to 5, **characterised in that** several wiper sections (62) the wiper element(s) arranged at a distance from one another in the conveying direction (64) are always simultaneously in contact with the filter medium (33).

7. Separating apparatus according to any of claims 1 to 6,**characterised in that** the filter medium (33) forms part of the wall of an oblong channel- or tube-shaped filter housing (38) lying horizontally or inclined, its longitudinal axis (42) extending in the conveying direction (64).

8. Separating apparatus according to claim 7, **characterised in that** the filter medium (33) takes up at least the bottom area of the circumferential wall section (43) of the filter housing (38).

9. Separating apparatus according to claim 7 or 8, **characterised in that** the wall section (43) of the filter housing (38) which is circumferential in relation to the longitudinal axis (42) is entirely made up of filter medium (33).

10. Separating apparatus according to any of claims 1 to 9, **characterised in that** the tensioning device (65) acts together with the filter medium (33).

11. Separating apparatus according to any of claims 1 to 10, **characterised in that** the wiper element (58) is represented by the screw element (57) of a rotary-driven screw conveyor (56) extending in the conveying direction (64).

12. , Separating apparatus according to claim 11, **characterised in that** the filter medium (33) coaxially encloses at least part of the circumference of the screw conveyor (56).

13. Separating apparatus according to any of claims 1 to 12, **characterised in that** the filter medium (33) consists of a metal and/or plastic material.

14. Separating apparatus according to any of claims 1 to 13, **characterised in that** the filter medium is designed as a perforated or mesh- or fabric-like thin-walled part.

15. Separating apparatus according to any of claims 1 to 14, **characterised in that** the filter device (25) forms part of a fine filter stage (15) arranged downstream of a main filter stage (14).

16. Separating apparatus according to any of claims 1 to 15, characterised by one or more hydrocyclones (24) arranged upstream of the filter device and supplying the filter device (25) with their discharged material.

## Revendications

1. Dispositif de séparation destiné à séparer des matières solides contenues dans un liquide dans la fabrication des plaquettes de circuits imprimés, notamment pour séparer l'isolant décapé du liquide décapant, comportant un dispositif de filtrage (25) qui comporte un moyen filtrant (33) qui laisse passer le liquide et retient les matières solides, sur lequel est appliquée la suspension (6') à filtrer, et qui contient un dispositif de transport pour éliminer les matières solides filtrées (gâteau de filtration) de la zone de filtrage (34) ainsi qu'un dispositif de nettoyage pour nettoyer la surface du moyen filtrant (33) des résidus du gâteau de filtrage déposés sur celui-ci, le dispositif de transport et le dispositif de nettoyage étant réalisés comme un ensemble sous la forme d'un dispositif de raclage (55), qui comporte au moins un élément de raclage (58) qui est en contact avec la surface (52) dirigée vers le haut du moyen filtrant (33) et qui peut être déplacé sur le moyen filtrant (33), dans le sens de transport (64) voulu, en entraînant le gâteau de filtration, et comportant un dispositif de serrage (65) pour régler une précontrainte par laquelle le ou les élément(s) de raclage (58) et le moyen filtrant (33) sont pressés l'un contre l'autre.

2. Dispositif de séparation selon la revendication 1, **caractérisé en ce que** le moyen filtrant (33) est disposé incliné, le sens de transport (64) s'étendant obliquement vers le haut.

3. Dispositif de séparation selon la revendication 1 ou 2, **caractérisé en ce qu**'une zone d'extraction (36) du gâteau de filtration fait suite à la zone de filtration (34), dans le sens de transport (64) du gâteau de filtration.

4. Dispositif de séparation selon la revendication 3, **caractérisé en ce que** le dispositif de filtrage (25) comporte, dans la zone d'extraction (36), au moins une ouverture d'extraction (37) orientée vers le bas, à travers laquelle le ou les éléments de raclage (58) passent avantageusement, au moins en partie, pendant le fonctionnement du dispositif de raclage (55).

5. Dispositif de raclage selon l'une des revendications 1 à 4, **caractérisé en ce que** le dispositif de filtrage (25) est disposé, au moins par sa zone de filtrage (34), dans/ou au-dessus d'un récipient de collecte (35) du filtrat traversant le moyen filtrant (33).

6. Dispositif de séparation selon l'une des revendications 1 à 5, **caractérisé en ce que** le ou les éléments de raclage sont toujours simultanément en contact avec le moyen filtrant (33), par plusieurs parties de raclage (62) espacées les unes des autres dans le sens de transport (64).

7. Dispositif de séparation selon l'une des revendications 1 à 6, **caractérisé en ce que** le moyen filtrant (33) fait partie intégrante de la paroi d'un boîtier de filtre (38) allongé, de type rigole ou tube, qui s'étend horizontalement ou obliquement dans une orientation à plat et dont l'axe longitudinal (42) est dirigé dans le même sens que le sens de transport (64).

8. Dispositif de séparation selon la revendication 7, **caractérisé en ce que** le moyen filtrant (33) occupe au moins la zone située à la partie inférieure de la portion de paroi périphérique (43) du boîtier de filtre (38).

9. Dispositif de séparation selon la revendication 7 ou 8, **caractérisé en ce que** la portion de paroi (43), périphérique par rapport à l'axe longitudinal (42), du boîtier de filtre (38), est formée dans son ensemble par le moyen filtrant (33).

10. Dispositif de séparation selon l'une des revendications 1 à 9, **caractérisé en ce que** le dispositif de serrage (65) coopère avec le moyen filtrant (33).

11. Dispositif de séparation selon l'une des revendications 1 à 10, **caractérisé en ce que** l'élément de raclage (58) est constitué par l'élément à vis sans fin (57) d'une vis sans fin de transport (56) entraînée en rotation et s'étendant dans le sens de transport (64).

12. Dispositif de séparation selon la revendication 11, **caractérisé en ce que** le moyen filtrant (33) entoure coaxialement la vis sans fin de transport (56) sur au moins une partie de son pourtour.

13. Dispositif de séparation selon l'une des revendications 1 à 12, **caractérisé en ce que** le moyen filtrant (33) est en métal et/ou en matière plastique.

14. Dispositif de séparation selon l'une des revendications 1 à 13, **caractérisé en ce que** le moyen filtrant est réalisé en tant que composant perforé à paroi mince, de type tressé ou tissé.

15. Dispositif de séparation selon l'une des revendications 1 à 14, **caractérisé en ce que** le dispositif de filtrage (25) fait partie intégrante d'un étage de filtrage fin (15) situé en aval d'un étage de filtrage principal (14).

16. Dispositif de séparation selon l'une des revendications 1 à 15, caractérisé par un ou plusieurs hydro-cyclones (24) situés en amont du dispositif de filtrage, les matières extraites de ceux-ci alimentant le dispositif de filtrage (25).
